# EUROPEAN PATENT APPLICATION

(11) **EP 4 462 111 A1**
(43) Date of publication of application: **13.11.2024**
(21) Application number: 23382426.7
(22) Date of filing: 08.05.2023
(51) Int. Cl.: G01N 25/18

(54) **DEVICE FOR MEASURING THE THERMAL CONDUCTIVITY OF SAMPLES**

(71) Applicant: AIRBUS OPERATIONS, S.L.U., 28906 Getafe (Madrid) (ES)
(72) Inventor: VAZQUEZ CASTRO, Jesus Javier, 28906 Getafe (Madrid) (ES); TORAL VAZQUEZ, Javier, 28906 Getafe (Madrid) (ES); BARCELO CASTELLO, Veronica, 28906 Getafe (Madrid) (ES); PEREZ GRANDE, Isabel, 28906 Getafe (Madrid) (ES); TORRALBO GIMENO, Ignacio, 28906 Getafe (Madrid) (ES); PIQUERAS CARREÑO, Javier, 28906 Getafe (Madrid) (ES); GONZALEZ HERRERO, Juan Miguel, 28906 Getafe (Madrid) (ES); LE CAILLEC, Thomas, 28906 Getafe (Madrid) (ES)
(74) Representative: Herrero & Asociados, S.L.

(57) **Abstract**

The device for measuring the thermal conductivity of samples comprises: one or more test modules (2), the or each test module (2) comprising a casing (4) and a module base (12) for a sample (5); a cooling circuit (3) for cooling the one or more test modules (2); a plurality of heaters (9) that heat the sample (5) and the casing (4); a plurality of temperature sensors (8) that measure the temperature of the sample or samples (5) and casing or casings (4); and control means (10) that receive the power fed to the heaters (9) and the temperature measured by the temperature sensors (8) for measuring the thermal conductivity of the sample or samples (5).

It permits to carry out conductivity tests of various samples under high vacuum at a wide range of temperatures, especially at cryogenic conditions.

## Description

The present invention relates to a device for measuring the thermal conductivity of samples, in particular, at cryogenic conditions.

### Background of the invention

Several systems for measuring material thermal conductivity are currently known and are defined in several standards.

For example, ASTM standard C177-19 discloses a method for steady-state heat flux measurements and thermal transmission properties by means of a guarded-hot-plate apparatus.

The method disclosed in this standard is principally aimed to test through-the-thickness plates, not adequate to test thin samples.

Another example is disclosed in ASTM standard E-1225, which discloses measuring thermal conductivity of solids by means of guarded-comparative-longitudinal heat flow. The method disclosed in this standard is a comparative method between specimen and calibrated material.

The use of a characterized material of similar conductivity implies additional absolute test to characterize the "meter" material. Moreover, the test is complex, since it requires a long process for the sample preparation and a pressure load to be applied on the sample, it results in a high cost of the test.

The NASA method TFAWS18-CT-02 relates to cryogenic thermophysical properties measurements of materials at the cryogenics and fluids branch.

This method has several drawbacks, such as the isolation of the sample must to be made from a fiber that contaminates the chamber and makes difficult the several required mounting and dismounting and the instrumentation monitoring.

### Description of the invention

Therefore, an objective of the present invention is to provide a device for measuring the thermal conductivity of samples that permits to carry out conductivity tests of various samples under high vacuum at a wide range of temperatures, especially at cryogenic conditions.

With the device for measuring the thermal conductivity of samples of the invention, the aforementioned drawbacks are solved, presenting other advantages that will be described below.

The device for measuring the thermal conductivity of samples according to the present invention is defined in claim 1. The dependent claims include additional optional features.

In particular, the device for measuring the thermal conductivity of samples comprises:
- one or more test modules, the or each test module comprising a casing and a module base for a sample;
- a cooling circuit for cooling the one or more test modules;
- a plurality of heaters that heat the sample and the casing; the sample heater is specifically isolated from the rest of the interior of the casing through multi-layer insulation
- a plurality of temperature sensors that measure the temperature of the sample or samples and casing or casings; and
- control means that receive the power fed to the two or more heaters and the temperature measured by the temperature sensors for measuring the thermal conductivity of the sample or samples.

Furthermore, the device also comprises preferably a chamber baseplate on which the more or more test modules are placed, and the cooling circuit is connected to the base.

According to a preferred embodiment, at least one of the heaters is placed outside the casing and at least one of them being placed on the sample inside the casing.

Furthermore, the casing preferably comprises a plurality of insulation layers, wherein the insulation layers are placed equidistantly spaced along the length of the casing, and each of the insulation layers comprises a through hole for the passage of the sample through it.

The device also comprises preferably an isolating cage that covers the test module(s) and isolate it or them from the chamber walls, which are controlled thermally.

According to a preferred embodiment, the temperature sensors are thermocouples.

Furthermore, the device for measuring the thermal conductivity of samples comprises an insulation for isolating the heater(s) that heat the sample from the rest of the casing.

The device according to the present invention enables the conductivity test of various samples under high vacuum at a wide range of temperatures, especially at cryogenic temperatures, since the base of the set-up can be cooled, for example, with nitrogen (-196 °C), hydrogen (-253 °C) and helium (-269 °C).

In particular, it provides the following advantages:
- No soiling is produce inside the test chamber, thanks to the isolation inside the guard, instead of polluting particles;
- The heat loss is limited along the samples, thanks to the multiple horizontal isolation layers and the control of the guard temperature;
- It permits to measure quite low conductivity, for example, the one for an insulation material in cryogenic temperature (0.3 W/m-K);
- It is easily reusable, since the module base is adaptable to a range of sample width, thickness and height and all isolation parts are dismountable and reusable;
- It permits the test of several samples at a time, thanks to a simple accommodation in the test chamber.

### Brief description of the drawings

For a better understanding of what has been stated, some drawings are attached in which, schematically and only as a non-limiting example, a practical case of embodiment is represented.
Figure 1 is a diagrammatical frontal view of the device for measuring the thermal conductivity of samples according to the present invention, comprising the test modules; and

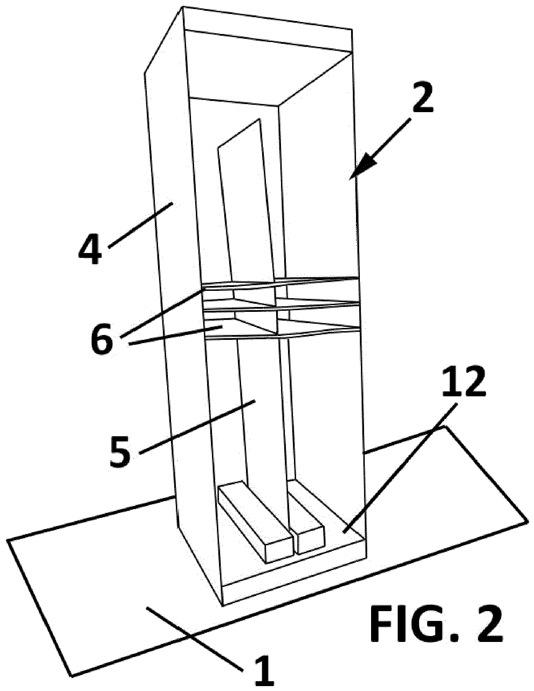

Figure 2 is a perspective view of one module of the device for measuring the thermal conductivity of samples according to the present invention.

### Description of a preferred embodiment

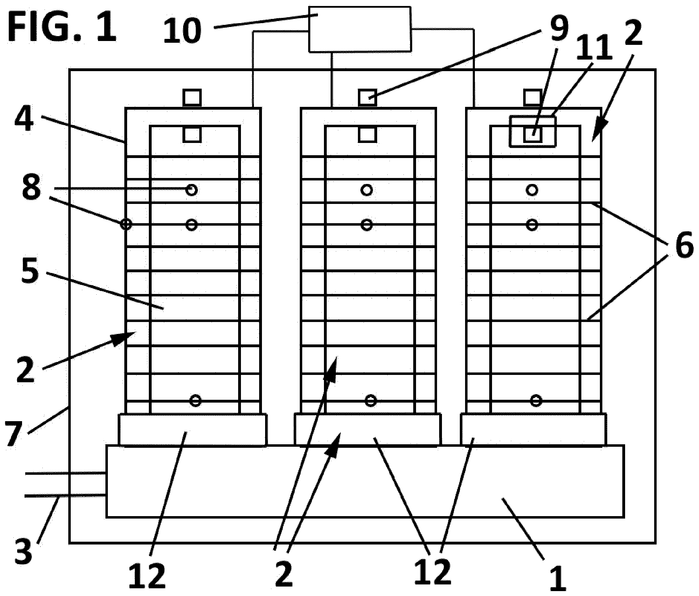

The device for measuring the thermal conductivity of samples according to the present invention comprises a chamber baseplate 1 on which one or more test modules 2 are placed. The embodiment shown in figure 1 comprises three test modules 2, but it can comprise any number of test modules.

The chamber baseplate 1 can be made from aluminum, and it is cooled by a cooling circuit 3, so that the test for measuring the thermal conductivity is carried at any desired temperature, for example, at cryogenic temperatures thanks to a cooling coil filled with liquid embedded in the chamber baseplate 1.

Each test module 2 comprises a casing 4 for providing the same temperature gradient as the one of the sample to reduce heat loss, inside of which is placed a sample 5, that is preferably a plate, such as a rectangular plate. For example, the sample 5 can be a plate with a width of about 50 mm, a thickness from 1 to 10 mm and a length from 100 to 200 mm.

The sample 5 can be clamped to the module base 12 by any suitable means, for example, by bolts that maintain the contact pressure between the sample 5 and the module base 12 and enable high contact conductance.

The module base 12 is connected to the cooled chamber baseplate 1 by bolts that maintain the contact pressure and a high contact conductance thanks to a thermal filler.

Along the height of the casing 4, insulation layers 6 are placed, in particular, horizontally according to the shown embodiment, and for example, about every 10 mm. Said insulation layers 6 reduce drastically the heat loss through radiation, and the contact conductance of these insulation layers 6 with the sample 5 is reduced to the minimum.

Each of the insulation layers 6 comprises a through hole for the passage of the sample 5 through it.

It must be pointed out that for simplicity reasons only three insulation layers 6 are shown, but the insulation layers 6 substantially are over the whole length of the casing 4, especially between the two extreme temperature sensors 8.

The device for measuring the thermal conductivity of samples according to the present invention also comprises an isolating cage7, for example, made from multi layered insulation hold by a light metallic structure, closing the whole device, including the test modules 2 with their module base 12.

The device for measuring the thermal conductivity of samples comprises an insulation 11 for isolating the heater(s) 9 that heat the sample 5 from the rest of the casing 4.

The isolating cage 7 and the test modules are placed under high vacuum in the test chamber, which internal walls temperature is actively controlled.

The sample(s) 5, the casing(s) 4 and/or the isolating cage 7 comprise temperature sensors 8, for example, thermocouples, and heaters 9, as shown in figure 1, and also electronic connections to the outside of the device.

The device for measuring the thermal conductivity of samples according to the present invention also comprises control means 10, such as a computer, that receives the information from the temperature sensors 8 and control the heaters 9.

Venting is taken into account in the design of the device to prevent pressure issues inside the device.

The operation of the device for measuring the thermal conductivity of samples according to the following invention is the following.

Firstly, one sample 5 is placed inside the or each test module 2 and clamped in the module base 12 for the thermal conductivity test. The insulation layers 6 are placed and the case 4 is closed. The module base 12 of the or each test module 2 are fixed to the chamber baseplate 1. The isolating cage 7 is placed on the module(s) 2.

High vacuum is imposed inside the thermal test chamber and the thermal test chamber walls are cooled to low temperature. The chamber baseplate 1 is cooled to low temperature, for example, by liquid nitrogen.

The cooling of the module base 12 of the test module(s) 2 is by carried out by cooling the chamber baseplate 1 until it reaches a predetermined temperature.

At the same time, the heaters 9 are activated until they reach a predetermined temperature and then the power of the heaters 9 is adjusted to stabilize this temperature.

When a stationary phase is obtained, the power to the heaters 9 and the temperatures measured by the temperature sensors 8 enable to calculate the thermal conductivity by the control means 10.

Next, the test is repeated with other temperatures to draw a conductivity curve.

Despite the fact that reference has been made to a specific embodiment of the invention, it is clear to a person skilled in the art that the described locking system is susceptible to numerous variations and modifications, and that all the mentioned details can be substituted by others technically equivalent ones, without departing from the scope of protection defined by the appended claims.

## Claims

1. Device for measuring the thermal conductivity of samples, **characterized in that** it comprises:
- one or more test modules (2), the or each test module (2) comprising a casing (4) and a module base (12) for a sample (5);
- a cooling circuit (3) for cooling the one or more test modules (2);
- a plurality of heaters (9) that heat the sample (5) and the casing (4);
- a plurality of temperature sensors (8) that measure the temperature of the sample or samples (5) and casing or casings (4); and
- control means (10) that receive the power fed to the heaters (9) and the temperature measured by the temperature sensors (8) for measuring the thermal conductivity of the sample or samples (5).

2. Device for measuring the thermal conductivity of samples according to claim 1, wherein the device also comprises a chamber baseplate (1) on which the more or more test modules (2) are placed.

3. Device for measuring the thermal conductivity of samples according to claim 1 and 2, wherein the cooling circuit (3) is connected to the chamber baseplate (1).

4. Device for measuring the thermal conductivity of samples according to any one from the previous claims, wherein the device comprises more than two heater (9), at least one of them being placed outside the casing (4) and at least one of them being placed inside the casing (4).

5. Device for measuring the thermal conductivity of samples according to any one of the previous claims, wherein the casing (4) comprises a plurality of insulation layers (6).

6. Device for measuring the thermal conductivity of samples according to claim 5, wherein the insulation layers (6) are placed equidistantly spaced along the length of the casing (4).

7. Device for measuring the thermal conductivity of samples according to claim 5 or 6, wherein each of the insulation layers (6) comprises a through hole for the passage of the sample (5) through it.

8. Device for measuring the thermal conductivity of samples according to any one of the previous claims 2-7, wherein the device comprises an isolating cage(7) that covers the test module(s) (2) and the chamber baseplate (1).

9. Device for measuring the thermal conductivity of samples according to claim 1, wherein the one or more temperature sensors (8) are thermocouples.

10. Device for measuring the thermal conductivity of samples according to any one of the previous claims, wherein the heater(s) (9) that heat the sample (5) is(are) isolated from the rest of the casing (4) by an insulation (11).
